# EUROPÄISCHE PATENTSCHRIFT

(11) **EP 0 989 042 B1**
(45) Veröffentlichungstag und Bekanntmachung des Hinweises auf die Patenterteilung: **07.02.2007**
(21) Anmeldenummer: 99116536.6
(22) Anmeldetag: 24.08.1999
(51) Int. Cl.: B62B 5/00, B60L 15/20, B62B 5/06

(54) **Verteiler-bzw. Zustellerwagen**
Distribution or transport trolley
Véhicule de distribution ou de transport

(30) Priorität: 22.09.1998 DE 19843486
(43) Veröffentlichungstag der Anmeldung: 29.03.2000
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Gallo, Wolfgang

(56) Entgegenhaltungen:
- EP-A- 0 694 432
- DE-A- 19 723 973
- FR-A- 2 679 669
- US-A- 4 109 186

## Beschreibung

Die Erfindung bezieht sich auf einen Verteiler-bzw. Zustellerwagen, insbesondere einen lenkbaren, nicht schienengebundenen, im Wesentlichen aus einem über wenigstens eine um eine vertikale Achse schwenkbare Lenkrolle und zwei mit einem getriebelos integrierten, unter Last anlaufenden, drehrichtungs-umkehrbaren Elektromotor ausgestatteten Bockrollen gegen den Boden abgestützten Wagenchassis und einem an dieses angeschlossenen aufragenden Griffbügel sowie einer Energiequelle bestehenden Wagen, bei dem die Energieversorgung der Elektromotoren und der Bremsbetätigung durch eine mittels mindestens eines, zumindest ein Paar, die am Griffbügel in Wagenlängsrichtung ausgeübten Schub- und Zugkräfte in Steuersignale umwandelnder Kraftmessern ausgestatteten Hangriffes ansteuerbare Steuer-und Regeleinrichtung beherrscht ist.

Ein derartiger Wagen ist aus der DE-A-19723973 bekannt.

Bei einer bekannten Bauart eines derartigen Verteiler-bzw. Zustellerwagen umfaßt der Wagen ein aus Rahmenholmen und Quertraversen gebildetes und mit einer durch einen angeschlossenen aufragenden Griffbügel gebildeten Lenkeinrichtung Wagenchassis, welches über eine hintere durch Bockrollen gebildete und eine durch zwei voneinander unabhängig um je eine vertikale Achse schwenkbare vordere Lenkrollen gebildete Laufachse gegen den Boden abgestützt und wahlweise mit einer Plattform oder einem Aufbau zur Aufnahme des zu transportierenden Gutes ausrüstbar ist. Bei dem bekannten Wagen dient eine seiner beiden Achsen als Antriebsachse und sind den Rollen dieser Achse unter Last anlaufende, drehrichtungsumkehrbare Elektromotoren zugeordnet, deren Energieversorgung sowohl hinsichtlich ihrer Zu-und Abschaltung als auch hinsichtlich ihrer Größe bzw. Höhe durch eine Steuer-und Regeleinrichtung beherrscht ist, wobei die Steuer-und Regeleinrichtung durch Schalter oder Fühler erzeugte Impulse empfängt und in entsprechende Schalt- oder Regelsignale für die Energieversorgung der Elektromotoren umwandelt. Die der Erzeugung von Impulsen zugeordneten Schalter oder Fühler bestehen dabei aus an den Hangriffen oder am Griffbügel ausgeübte Zug-oder Schubkräfte bzw. Lenkkräfte erkennenden und in Steuerimpulse umsetzenden Kraftmessern, insbesondere aus Streifen eines seinen elektrischen Widerstand proportional zu einer auf seine Gesamtfläche insgesamt aufgebrachten Druckkraft ändernden Folienmaterials. Die Betriebsbereitschaft des gesamten aus der Steuer-und Regeleinrichtung und den die an den Handgriffen angreifenden Steuer-und Lenkkräfte in Steuersignale umwandelnden Sensoren bestehenden Systemes wird dabei jedoch mittels eines manuell zu betätigenden Hauptschalters herbeigeführt.

Der Einsatz eines für die Herstellung der Betriebsbereitschaft des gesamten Energieversorgungssystemes der Antriebsmotoren und damit des Wagens insgesamt verantwortlichen manuell zu betätigenden Hauptschalters erfordert zum einen, einen gewissen konstruktiven und wirtschaftlichen Aufwand und ist zum anderen mit dem Nachteil behaftet, daß auf der einen Seite infolge systemimmanenter Gegebenheiten zwischen der Betätigung des Hauptschalters und der tatsächlichen Betriebsbereitschaft eine gewisse Zeitspanne liegt, während die Anwendung eines manuell zu betätigenden Schalters auf der anderen Seite überhaupt einen Übergang z.B. zwischen ferngesteuerter und manueller Betriebsweise eines Wagens jedenfalls insoweit ausschließt, als es im praktischen Betrieb nicht möglich ist mit Hilfe des manuell zu betätigenden Hauptschalters von einer automatischen auf eine individuelle Betriebsweise umzuschalten. Im Übrigen haftet der eingangs aufgezeigten, bekannten Bauart eines Verteiler-bzw. Zustellerwagens noch der Nachteil an, daß auch bei ausschließlich auf manuellen Betrieb ausgerichtetem Energieversorgungssystem für die Antriebsmotoren ein gewisses Sicherheitsdefizit darin gesehen werden kann, daß bei mittels manuellem Schalter bleibend hergestellter Betriebsbereitschaft eine Ansteuerung der Antriebsmotoren auch durch einen gegen die Handgriffe lediglich angelehnten Gegenstand oder vergleichbares, wirklich unbeabsichtigtes Berühren der Handgriffe herbeigeführt werden kann.

Der Erfindung liegt daher die Aufgabe zugrunde einen Zustell- bzw. Verteilerwagen der eingangs genannten Bauart dahingehend zu verbessern, daß die vorstehend aufgezeigten Nachteile vermieden werden und darüber hinaus sowohl die Herstellung der Betriebsbereitschaft des Wagens insgesamt als auch eine möglicherweise erwünschte Umschaltung zwischen automatischem und manuellem Betrieb vereinfacht bzw. ermöglicht wird.

Diese Aufgabe wird bei einem Verteiler-bzw. Zustellwagen der eingangs genannten Bauart erfindungsgemäß im Wesentlichen dadurch gelöst, daß dem aus der die Energieversorgung der Elektromotoren beherrschenden Steuer-und Regeleinrichtung und den die an den Handgriffen angreifenden Steuer-und Lenkkräfte in Steuersignale umwandelnden Sensoren bestehenden System wenigstens ein die Anwesenheit einer Bedienungsperson erfassender Näherungsdetektor vorgeschaltet ist. Der Näherungsdetektor ersetzt dabei nicht nur den bei der bekannten Bauart notwendigen Hauptschalter, sondern kann darüber hinaus auch noch als Schaltelement für eine Umschaltung zwischen automatischer und manueller Betriebsweise sowie im Weiteren schließlich auch noch zur Kontrolle der Anwesenheit oder Wachheit bzw. Aufmerksamkeit der Bedienungsperson genutzt werden.

In einer ersten Verwirklichungsform ist vorgesehen, daß der wenigstens eine Näherungsdetektor in einem sog. Standby-Betrieb auch bei im Übrigen abgeschalteten Antriebs-und Steuersystem des Wagens ständig aktiv ist und bei Erkennung der Annäherung, insbesondere einer Bedienungsperson, die die Steuer- und Lenkkräfte in Steuersignale umwandelnden Sensoren und die die Energieversorgung der Elektromotoren beherrschende Steuer-und Regeleinrichtung in Betriebsbereitschaft versetzt. Dabei kann der Näherungsdetektor bis zu einer gewissen, sicherlich begrenzten Weite die Umgebung des Wagens, insbesondere der Handgriffe des Wagens überwachen, in der Weise, daß bei einer Annäherung einer Hand oder eines sonstigen Teiles eines menschlichen Körpers die gleiche Einschaltfunktion ausgelöst wird, wie sie auch der manuelle Hauptschalter herkömmlicher Bauarten von Wagen hat. Ein erster Vorteil dieser Einschaltfunktion des Näherungsdetektors besteht darin, daß die Zeit zwischen dem Erkennen der Annäherung, z.B. einer Hand und deren erreichen des Handgriffes dazu genutzt wird, um den Systemstart auszulösen und die krafterfassenden Sensoren abzugleichen bzw. auf eine korrekte Neutralstellung hin zu überprüfen, mit der angenehmen Folge, daß der Wagen voll betriebsbereit ist sobald die Hand einer Bedienungsperson tatsächlich am Handgriff zur Anlage kommt. Ein solcherart eingesetzter Näherungsdetektor kann aber auch zum Abkoppeln des Wagens von einem Fernsteuerungssystem eingesetzt werden, insbesondere dahingehend, daß der Einfluß der Fernsteuerung auf die Steuer-und Regeleinrichtung beendet wird, bevor die Hand einer Bedienungsperson den Handgriff erreicht. Sofern beabsichtigt ist, daß eine Bedienungsperson einen in Bewegung befindlichen Wagen willkürlich aus einer durch ein gleis- und drahtloses Leit- bzw. Steuersystem vorgezeichneten Bewegungsbahn herauslenken können soll, kann in die Schaltfunktion des Näherungsdetektors auch noch eine Bremsschalt- bzw. Wagenverzögerungsfunktion integriert sein, um der Bedienungsperson einen gefahrlosen zugriff auf den oder die Handgriffe des Wagens zu ermöglichen.

In einer besonders einfach einzubauenden und mit einem geringen tatsächlichen und räumlichen Aufwand auskommenden Einzelausgestaltung dieser Verwirklichungsform kann ferner vorgesehen sein, daß der Näherungsdetektor mit dem oder den die an dem oder den Hangriff(en) ausgeübten Kräfte in Steuersignale für die die Energieversorgung der Elektromotoren beherrschende Steuer-und Regeleinrichtung umwandelnden Kraftmessern zumindest baueinheitlich ausgebildet ist.
Besonders geeignet erscheint eine solche Verwirklichung für Anlagen, wo im Rahmen einer Serienfertigung z.B. in einem großen Fabrikgelände Materialien oder halb bzw. voll vormontierte Teile von einem Lager oder Magazin zu unterschiedlichen Endmontageplätzen befördert werden müssen und hierfür selbstfahrende, mittels im Boden verlegter Leitungen induktiv gesteuerte bzw. geführte Wagen eingesetzt werden, da sie eine willkürliche Umleitung von Wagen innerhalb eines begrentzen Bereiches beispielsweise zwischen zwei verschiedenen Endmontageplätzen ermöglicht.

In einer zweiten Verwirklichungsform ist vorgesehen, daß der Näherungsdetektor ein erstes ein zumindest einen Teilbereich der Handgriffumgebung übergreifendes elektrisches und insbesondere elektromagnetisches Feld erzeugendes Teil und ein zweites durch dieses elektrische bzw. elektromagnetische Feld passiv gehaltenes, in Schaltverbindung mit der die Energieversorgung der Elektromotoren beherrschenden Steuer-und Regeleinrichtung stehendes Teil umfaßt. Eine derartige Anordnung und Ausbildung des Näherungsdetektors eignet sich in hervorragender Weise zur Sicherstellung der Aufrechterhaltung der Betriebsbereitschaft des Wagens lediglich über denjenigen Zeitbereich hin über welchen hin sich die Bedienungsperson in einer zur Ausübung der Herrschaft über die Bewegungsweise des Wagens geeigneten Position befindet. Insbesondere in einer Ausgestaltungsform, in welcher vorgesehen ist, daß das erste Teil eines zweiteilig ausgebildeten Näherungsdetektors an einem im Abstand zum Wagenchassis befindlichen Teil bzw. an einem vom Wagenchassis abstehenden Teil des Schiebebügels oder eines mit diesem verbundenen Handgriffes und das zweite Teil des Näherungsdetektors am Wagenchassis bzw. an einem an diesem angeordneten Teil, gegebenenfalls auch an dem die Handgriffe tragenden Schiebebügel angeordnet ist, ist sicher gestellt, daß eine Betriebsbereitschaft des Wagens nur dann gegeben ist, wenn sich wenigstens eine Hand der Bedienungsperson im Bereich einer Steuer-und Lenkeinrichtung des Wagens befindet.

In einer bevorzugten Ausgestaltung dieser Verwirklichungsform ist im weiteren ferner vorgesehen, daß der oder die mit dem Griffbügel verbundenen Handgriffe eine eine Ebene wenigstens teilweise umgrenzende, insbesondere bügel- oder ringförmige Gestalt aufweisen und das vom dem oder den, vorzugsweise durch kapazitive Sensoren gebildeten Näherungsdetektoren erzeugte Feld jeweils in der vom jeweiligen Handgriff umgrenzten Ebene besteht. Damit kann die Betriebsbereitschaft des Wagens auf solche Zustände bzw. Zeiträume begrenzt werden, in welchen sich die Hand einer Bedienungsperson am Handgriff oder zumindest in unmittelbarer Nähe des Handgriffes befindet.

Eine zweckmäßige Einzelausgestaltung besteht dabei darin, daß der Handgriff jeweils einen im Wesentlichen C-oder U-förmigen Abschnitt und einen dessen offene Seite übergreifenden Stegteil umfaßt, wobei der Handgriff über seinen C-oder U-förmigen Abschnitt an den Schiebebügel angeschlossen ist und im Stegteil des Handgriffes, in einer an sich bekannten Weise, zwei bezüglich eines Widerlagers einander gegenüberliegend angeordnete lediglich auf den Wagen ausgeübte Schub- und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind.

Ausgehend von einer solchen oder einer vergleichbaren, eine Fläche bzw. Ebene wenigstens teilweise umgrenzenden Ausbildung eines Handgriffes sieht eine vorteilhafte Anordnungsform des Näherungsdetektors vor, daß eine positive Fläche für einen kapazitiven Sensor am Stegteil des Handgriffes ausgebildet ist und eine negative Fläche für einen kapazitiven Sensor am Schiebebügel bzw. am Wagenchassis ausgebildet ist.

In weiterer Ausgestaltung der Erfindung ist ferner noch vorgesehen, daß innerhalb eines im wesentlichen aus zwei einander zu einem Hohlkörper ergänzenden Teilschalen gebildeten C-oder U-förmigen Abschnitt des Handgriffes Steckverbindungen, zum einen für die Verbindung der Verkabelung der Sensoren mit der die Energieversorgung der Elektromotoren beherrschenden Steuer-und Regeleinrichtung und zum anderen für den Anschluß von Erweiterungseinrichtungen vorgesehen sind.

Darüber hinaus ergibt sich eine vorteilhafte Anordnung insbesondere daraus, daß im einen der einander gegenüberliegenden Schenkel des C-oder U-förmigen Abschnittes des Handgriffes die mit dem oder den Kraftsensoren verbundenen Kabel verlegt und fixiert sind und im gegenüberliegenden Schenkel des C-oder U-förmigen Abschnittes des Handgriffes die mit dem kapazitiven Sensor verbundenen Kabel verlegt und fixiert sind.

Die Erfindung ist in der nachfolgenden Beispielsbeschreibung anhand eines in der Zeichnung dargestellten Ausführungsbeispieles im Einzelnen beschrieben.
In der Zeichnung zeigt die
- Figur 1: eine schematische schaubildliche Darstellung eines Handgriffes für einen Verteiler-bzw. Zustellerwagen;
- Figur 2: eine schaubildliche Explosionsdarstellung eines Handgriffes nach Figur 1;
- Figur 3: eine schaubildliche Darstellung eines mit einem Anschlußteil eines Schiebebügels verbundenen Handgriffes nach Figur 1 oder 2;
- Figur 4: einen Schnitt durch den Hangriff entlang der Linie IV-IV in Figur 4;
- Figur 5: eine schematische Darstellung eines aus einer vorgezeichneten Bewegungsbahn auslenkbaren Wagens.

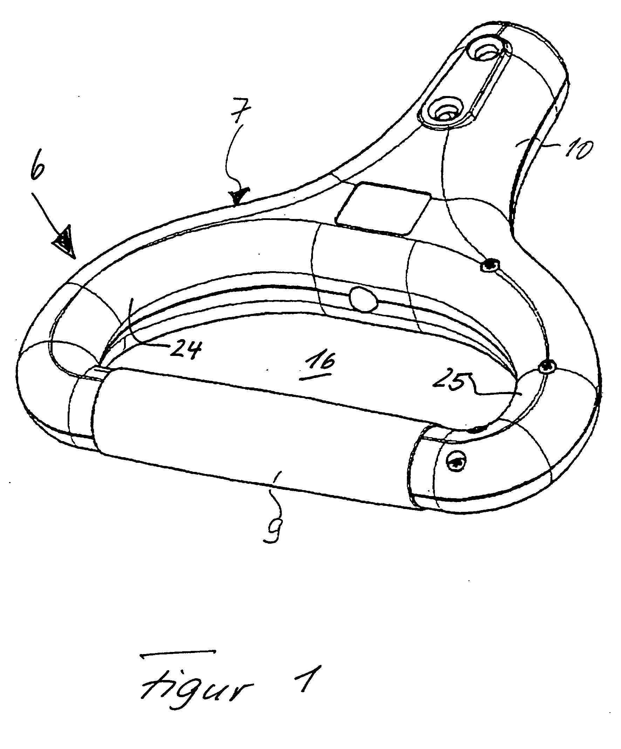

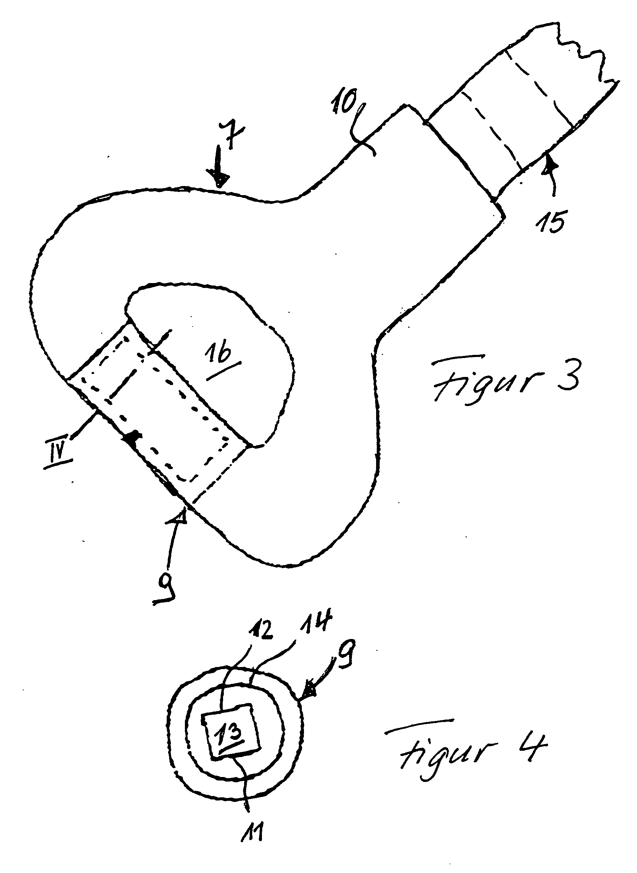

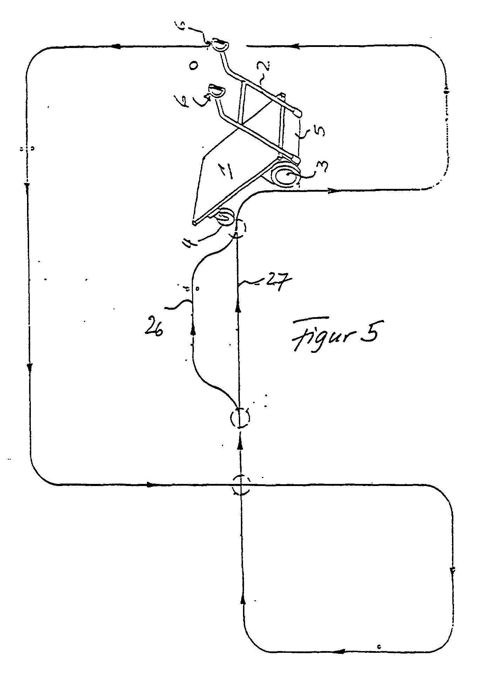

Ein aus einem mit einer Plattform 1 zur Aufnahme des zu transportierenden Gutes ausrüstbaren Wagenchassis, einer durch einen angeschlossenen aufragenden Griffbügel 2 gebildeten Lenkeinrichtung und über eine durch Bockrollen 3 gebildete hintere Starrachse und eine durch zwei voneinander unabhängig um je eine vertikale Achse schwenkbare vordere Lenkrollen 4 gebildete Laufachse bestehender Verteiler-bzw. Zustellerwagen ist mehr oder minder schematisch in der Darstellung der Figur 5 gezeigt. Der Verteiler-bzw. Zustellerwagen ist mit einer in einem Batteriekasten 5 untergebrachten Energiequelle und einer im Einzelnen nicht gezeigten Steuer-und Regeleinrichtung, welche die Energieversorgung für den Rollen 3 bzw. 4 einer Achse zugeordneten und vorzugsweise als drehrichtungsumkehrbare, unter Last anlaufende Radnabenmotoren ausgebildete Antriebsmotore sowohl hinsichtlich ihrer Zu- und Abschaltung als auch hinsichtlich ihrer Größe bzw. Höhe beherrscht, ausgestattet.
In der in den Figuren 1 bis 4 im Einzelnen näher dargestellten Ausführungsform ist in jedem der beiden an den aufragenden Griffbügel 2 angeschlossenen Handgriffe 6 eine im Einzelnen nicht gezeigte, an sich aber bekannte, im Wesentlichen aus zwei einander bezüglich eines Widerlagers gegenüberliegend angeordneten Streifen eines Folienmaterials, welches seinen elektrischen Widerstand proportional zu einer auf seine Gesamtfläche insgesamt aufgebrachten Druckkraft ändert, bestehende und lediglich auf den Wagen ausgeübte Schub- und Druckkräfte erkennende Kraftmesseinrichtung angeordnet, welche in Abhängigkeit von den an den Handgriffen angreifenden manuellen Kräften entsprechende Steuerimpulse für die Steuer-und Regeleinrichtung erzeugt. Der Handgriff 6 besteht aus einem einen im Wesentlichen C-oder U-förmigen Abschnitt 7 und einen dessen offene Seite 8 übergreifenden Stegteil 9, wobei der C-oder U-förmigen Abschnitt 7 mit einem Anschlußstutzen 10 zur Verbindung des Hangriffes 6 mit dem Schiebebügel 2 ausgestattet ist. Innerhalb des Stegteiles sind die in der Zeichnung nicht besonders gezeigten Streifen eines seinen elektrischen Widerstand proportional zu einer aufgebrachten Druckkraft ändernden Folienmaterials einander bezüglich eines starren kraftübertragenden Kernteiles 13 gegenüberliegend an zweien dessen Oberflächen 11 und 12 angeordnet. In der gezeigten Ausführungsform umfaßt der dem Handgriff 6 zugeordnete Näherungsdetektor eine an der Umfangsfläche des Stegteiles 9 des Handgriffes 6 ausgebildete positive Fläche 14 für einen kapazitiven Sensor und eine im Bereich des Schiebebügels 2 angebrachte negative Fläche 15 für einen kapazitiven Sensor, so daß zwischen den beiden gegensinnig gepolten Flächen 14 und 15 ein elektromagnetisches Feld besteht, welches die vom Handgriff 6 umgrenzte Fläche 16 übergreift und daher unterbrochen bzw. gestört wird, sobald eine Bedienungsperson im Begriffe steht den Stegteil 9 des Handgriffes 6 zu umfassen.

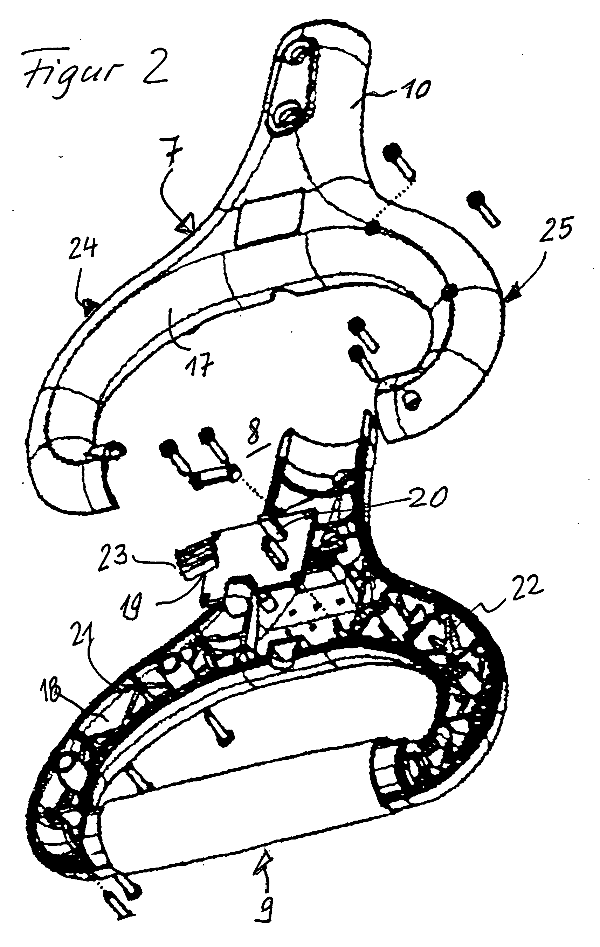

Wie im Einzelnen aus der in der Figur 2 gezeigten Explosionsdarstellung ersichtlich ist, sind innerhalb des im wesentlichen aus zwei einander zu einem Hohlkörper ergänzenden Teilschalen 17 und 18 gebildeten C-förmigen Abschnitt 7 des Handgriffes 6 Steckverbindungen 19 und 20, zum einen für die Verbindung der Verkabelung 21 und 22 der Sensoren mit der die Energieversorgung der Elektromotoren beherrschenden Steuer-und Regeleinrichtung und zum anderen für den Anschluß von Erweiterungseinrichtungen 23 vorgesehen sind. Die Verkabelung der Sensoren ist innerhalb des Handgriffes 6 so angeordnet, daß im einen 24 der einander gegenüberliegenden Schenkel des C-förmigen Abschnittes 7 die mit dem oder den Kraftsensoren verbundenen Kabel verlegt und fixiert und im gegenüberliegenden Schenkel 25 des C-förmigen Abschnittes 7 des Handgriffes 6 die mit dem kapazitiven Sensor verbundenen Kabel verlegt und fixiert sind.
Aus der Darstellung der Figur 5 ist ein Beispiel dafür ersichtlich, wie ein selbstfahrender und vermittels im Boden verlegter Leitungen induktiv gesteuerter bzw. geführter Wagen innerhalb eines begrenzten Bereiches 26 durch manuellen Eingriff aus seiner vorgezeichneten Bewegungsstrecke 27 herausgenommen werden kann, wenn die von ihm transportierten, halb bzw. voll vormontierten Teile infolge kurzfristiger Entscheidung zu einem anderen als dem in der automatischen Wegsteuerung des Wagens vorgesehenen Endmontageplatz befördert werden sollen.

## Patentansprüche

1. Verteiler-bzw. Zustellerwagen, insbesondere lenkbarer, nicht schienengebundener, im Wesentlichen aus einem über wenigstens eine um eine vertikale Achse schwenkbare Lenkrolle (4) und zwei mit einem getriebelos integrierten, unter Last anlaufenden, drehrichtungs-umkehrbaren Elektromotor ausgestatteten Bockrollen (3) gegen den Boden abgestützten Wagenchassis (1) und einem an dieses angeschlossenen aufragenden Griffbügel (2) sowie einer Energiequelle bestehender Wagen, bei dem die Energieversorgung der Elektromotoren und der Bremsbetätigung durch eine mittels mindestens eines, zumindest ein Paar, die am Griffbügel in Wagenlängsrichtung ausgeübten Schub- und Zugkräfte in Steuersignale umwandelnder Kraftmessern ausgestatteten Hangriffes (6) ansteuerbare Steuer-und Regeleinrichtung beherrscht ist,
**dadurch gekennzeichnet,**
**daß** dem aus der die Energieversorgung der Elektromotoren beherrschenden Steuer-und Regeleinrichtung und den die an den Handgriffen angreifenden Steuer-und Lenkkräfte in Steuersignale umwandelnden Sensoren bestehenden System wenigstens ein die Anwesenheit einer Bedienungsperson erfassender Näherungsdetektor (14, 15) vorgeschaltet ist.

2. Verteiler-bzw. Zustellerwagen nach Anspruch 1, **dadurch gekennzeichnet, daß** der wenigstens eine Näherungsdetektor in einem sog. Standby-Betrieb auch bei im Übrigen abgeschalteten Antriebs-und Steuersystem des Wagens ständig aktiv ist und bei Erkennung der Annäherung, insbesondere einer Bedienungsperson, die die Steuer-und Lenkkräfte in Steuersignale umwandelnden Sensoren und die die Energieversorgung der Elektromotoren beherrschende Steuer-und Regeleinrichtung in Betriebsbereitschaft versetzt.

3. Verteiler-bzw. Zustellerwagen nach Anspruch 1, **dadurch gekennzeichnet, daß** der Näherungsdetektor mit dem oder den die an dem oder den Hangriff(en) ausgeübten Kräfte in Steuersignale für die die Energieversorgung der Elektromotoren beherrschende Steuer-und Regeleinrichtung umwandelnden Kraftmessern zumindest baueinheitlich ausgebildet ist.

4. Verteiler-bzw. Zustellerwagen nach Anspruch 1, **dadurch gekennzeichnet, daß** der Näherungsdetektor ein erstes ein zumindest einen Teilbereich der Handgriffumgebung übergreifendes elektrisches und insbesondere elektromagnetisches Feld erzeugendes Teil und ein zweites durch dieses elektrische bzw. elektromagnetische Feld passiv gehaltenes, in Schaltverbindung mit der die Energieversorgung der Elektromotoren beherrschenden Steuer-und Regeleinrichtung stehendes Teil umfaßt.

5. Verteiler-bzw. Zustellerwagen nach Anspruch 4, **dadurch gekennzeichnet, daß** das erste Teil (14) des Näherungsdetektors an einem im Abstand zum Wagenchassis befindlichen Teil bzw. an einem vom Wagenchassis abstehenden Teil des Schiebebügels und das zweite Teil (15) des Näherungsdetektors am Wagenchassis bzw. an einem an diesem angeordneten Teil angeordnet ist.

6. Verteiler-bzw. Zustellerwagen nach Anspruch 4 und 5, **dadurch gekennzeichnet, daß** der oder die mit dem Griffbügel (2) verbundenen Handgriffe (6) eine eine Ebene wenigstens teilweise umgrenzende, insbesondere bügel- oder ringförmige Gestalt aufweisen und das vom dem oder den, vorzugsweise durch kapazitive Sensoren gebildeten Näherungsdetektoren erzeugte Feld jeweils in der vom jeweiligen Handgriff umgrenzten Ebene besteht.

7. Verteiler-bzw. Zustellerwagen nach Anspruch 4 bis 6, **dadurch gekennzeichnet, daß** der Handgriff jeweils einen im Wesentlichen C-oder U-förmigen Abschnitt (7) und einen dessen offene Seite (8) übergreifenden Stegteil (9) umfaßt, wobei der Handgriff über seinen C-oder U-förmigen Abschnitt an den Schiebebügel angeschlossen ist und im Stegteil des Handgriffes zwei bezüglich eines Widerlagers einander gegenüberliegend angeordnete lediglich auf den Wagen ausgeübte Schub- und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind.

8. Verteiler-bzw. Zustellerwagen nach Anspruch 4 bis 7, **dadurch gekennzeichnet, daß** eine positive Fläche für einen kapazitiven Sensor (14) am Stegteil des Handgriffes ausgebildet ist und eine negative Fläche für einen kapazitiven Sensor (15) am Schiebebügel bzw. am Wagenchassis ausgebildet ist.

9. Verteiler-bzw. Zustellerwagen nach Anspruch 4 bis 8, **dadurch gekennzeichnet, daß** innerhalb eines im wesentlichen aus zwei einander zu einem Hohlkörper ergänzenden Teilschalen gebildeten C-oder U-förmigen Abschnitt des Handgriffes Steckverbindungen (19, 20), zum einen für die Verbindung der Verkabelung der Sensoren mit der die Energieversorgung der Elektromotoren beherrschenden Steuer-und Regeleinrichtung und zum anderen für den Anschluß von Erweiterungseinrichtungen (23) vorgesehen sind.

10. Verteiler-bzw. Zustellerwagen nach Anspruch 4 bis 9, **dadurch gekennzeichnet, daß** im einen der einander gegenüberliegenden Schenkel des C-oder U-förmigen Abschnittes des Handgriffes die mit dem oder den Kraftsensoren verbundenen Kabel verlegt und fixiert sind und im gegenüberliegenden Schenkel des C-oder U-förmigen Abschnittes des Handgriffes die mit dem kapazitiven Sensor verbundenen Kabel verlegt und fixiert sind.

## Claims

1. A distribution or delivery trolley, in particular a steerable, non-rail-bound trolley, consisting essentially of a trolley chassis (1) supported against the ground via at least one steering roller (4) which can swivel around a vertical axis and two fixed rollers (3), each equipped with a gearless integrated electric motor which starts under load and can reverse its direction of rotation, a protruding handlebar (2) attached to said chassis and a source of energy, in which trolley the energy supply for the electric motors and for application of the brakes is controlled via a controllable regulating and control device by means of at least one handle (6) equipped with at least one pair of dynamometers which convert into control signals the thrust and pulling forces exerted on the handlebar in the longitudinal direction of the trolley,
**characterised in that**
at least one proximity sensor (14, 15) responding to the presence of an operator is connected upstream of the system consisting of the regulation and control device controlling the energy supply to the electric motors and of the sensors converting the control and steering forces exerted on the handles into control signals.

2. The distribution and delivery trolley, according to Claim 1, **characterised in that** the at least one proximity sensor is permanently active in a so-called "standby" mode even while the remaining drive and control system of the trolley is switched off and, on detecting an approach, in particular of an operator, switches into readiness the sensors converting the control and steering forces into control signals and the regulating and control device controlling the energy supply to the electric motors.

3. The distribution and delivery trolley according to Claim 1, **characterised in that** the proximity sensor is at least constructed as a single unit with the dynamometer(s) converting the forces exerted at the handle(s) into control signals for the regulating and control device controlling the energy supply of the electric motors.

4. The distribution and delivery trolley according to Claim 1, **characterised in that** the proximity sensor comprises a first part generating an electric and in particular electromagnetic field spanning at least a partial area of the handle environment and a second, fixed part held passively via this electric or electromagnetic field and in switching connection with the regulating and control device controlling the energy supply of the electric motors.

5. The distribution and delivery trolley according to Claim 4, **characterised in that** the first part (14) of the proximity sensor is arranged on a part positioned at a distance from the trolley chassis or on a part of the pushing bar protruding from the trolley chassis and the second part (15) of the proximity sensor is arranged on the trolley chassis or on a part arranged on the trolley chassis.

6. The distribution and delivery trolley according to Claims 4 and 5, **characterised in that** the handle(s) (6) connected with the handlebar (2) have a form, in particular a bow- or ring-shaped form, which defines a plane at least partly,and that the field generated by the proximity sensor(s), preferably formed by capacitative sensors, exists in the plane defined by the respective handle.

7. The distribution and delivery trolley according to Claims 4 to 6, **characterised in that** the handle comprises in each case an essentially Cor U-shaped section (7) and a web section (9) overlapping the open side (8) of said C- or U-shaped section, wherein the handle is attached to the pushing bar via its C- or U-shaped section and two dynamometers, arranged opposite to each other with respect to a thrust bearing and only recognising thrust and pulling forces applied to the trolley and made in particular by means of strips of a foil material which alters its electrical resistance in proportion to the magnitude of a pressure force applied overall to its entire surface, are arranged in the web section of the handle.

8. The distribution and delivery trolley according to Claims 4 to 7, **characterised in that** a positive area is formed for a capacitative sensor (14) on the web section of the handle and a negative area is formed for a capacitative sensor (15) on the pushing bar or on the trolley chassis.

9. The distribution and delivery trolley according to Claims 4 to 8, **characterised in that** within a C- or U-shaped section of the handle formed essentially of two part shells combining to give a hollow body plug-in connectors (19, 20) are provided, on the one hand, for connecting the wiring of the sensors with that of the energy supply of the regulating and control device controlling the electric motors and, on the other, for connecting extension units (23).

10. The distribution and delivery trolley according to Claims 4 to 9, **characterised in that** the cables connected to the dynamometer(s) are laid and fixed in one of the opposite arms of the C- or U-shaped section of the handle, and the cables connected with the capacitative sensor are laid and fixed in the oppositely positioned arm of the C- or U-shaped section of the handle.

## Revendications

1. Chariot de distribution ou de transport, en particulier chariot orientable, ne roulant pas sur rails, composé essentiellement d'un châssis de chariot (1) s'appuyant sur le sol par l'intermédiaire d'au moins une roue de direction (4) pouvant pivoter autour d'un axe vertical et de deux roues non orientables (3), équipées d' un moteur électrique intégré à entraînement direct, démarrant sous charge, à sens de rotation inversable, et d'un étrier de préhension (2) faisant saillie, raccordé audit châssis, ainsi que d'une source d'énergie, dans lequel l'alimentation en énergie des moteurs électriques et de l'actionnement des freins est contrôlée par un dispositif de commande et de régulation pouvant être activé au moyen d'au moins une poignée (6) équipée d'au moins une paire de dynamomètres transformant en signaux de commande les forces de poussée et de traction exercées sur l'étrier de préhension dans le sens longitudinal du chariot,
**caractérisé en ce**
**qu'**au moins un détecteur de proximité (14, 15) détectant la présence d'un opérateur est monté en amont du système composé du dispositif de commande et de régulation contrôlant l'alimentation en énergie des moteurs électriques et des capteurs transformant en signaux de commande les forces de commande et de guidage appliquées sur les poignées.

2. Chariot de distribution ou de transport selon la revendication 1, **caractérisé en ce que** l'au moins un détecteur de proximité est actif en permanence dans un fonctionnement appelé standby, même lorsque le système d'entraînement et de commande est par ailleurs arrêté et lors de la reconnaissance de la proximité, en particulier d'un opérateur qui met en ordre de marche les capteurs transformant en signaux de commande les forces de commande et de guidage et le dispositif de commande et de régulation contrôlant l'alimentation en énergie des moteurs électriques.

3. Chariot de distribution ou de transport selon la revendication 1, **caractérisé en ce que** le détecteur de proximité est réalisé au moins sous la forme d'une unité de construction avec le ou les dynamomètre(s) transformant les forces exercées sur la ou les poignée(s) en signaux de commande pour le dispositif de commande et de régulation contrôlant l'alimentation en énergie des moteurs électriques.

4. Chariot de distribution ou de transport selon la revendication 1, **caractérisé en ce que** le détecteur de proximité comprend une première partie produisant un champ électrique et en particulier électromagnétique recouvrant au moins une zone partielle de l'entourage de la poignée et une deuxième partie maintenue passive par ce champ électrique ou électromagnétique, qui est en connexion de couplage avec le dispositif de commande et de régulation contrôlant l'alimentation en énergie des moteurs électriques.

5. Chariot de distribution ou de transport selon la revendication 4, **caractérisé en ce que** la première partie (14) du détecteur de proximité est disposée sur une partie se trouvant à distance du châssis de chariot ou sur une partie de l'étrier de poussée s'écartant du châssis de chariot et la deuxième partie (15) du détecteur de proximité est disposée sur le châssis du chariot ou sur une partie disposée sur celui-ci.

6. Chariot de distribution ou de transport selon la revendication 4 et la revendication 5, **caractérisé en ce que** la ou les poignée(s) (6) reliée(s) à l'étrier de préhension (2) présente(nt) une configuration en particulier en forme d' étrier ou d' anneau, délimitant un plan au moins en partie et le champ produit par le ou les détecteur(s) de proximité constitué(s) de préférence par des capteurs capacitifs est à chaque fois dans le plan délimité par la poignée correspondante.

7. Chariot de distribution ou de transport selon les revendications 4 à 6, **caractérisé en ce que** la poignée comprend chaque fois un segment (7) sensiblement en forme de C ou de U et une partie traverse (9) recouvrant le côté ouvert (8) dudit segment, la poignée étant raccordée à l'étrier de poussée par l'intermédiaire de son segment en forme de C ou de U et **en ce que**, dans la partie traverse de la poignée, sont disposés deux dynamomètres disposés à l'opposé l'un de l'autre par rapport à un palier de butée, reconnaissant simplement des forces de poussée et de pression exercées sur le chariot, formés en particulier par des bandelettes d'un matériau en feuille dont la résistance électrique varie proportionnellement à une force de pression appliquée dans l'ensemble sur la totalité de sa surface.

8. Chariot de distribution ou de transport selon les revendications 4 à 7, **caractérisé en ce qu'**une surface positive pour un capteur capacitif (14) est formée sur la partie traverse de la poignée et une surface négative pour un capteur capacitif (15) est formée sur l'étrier de poussée ou sur le châssis du chariot.

9. Chariot de distribution ou de transport selon les revendications 4 à 8, **caractérisé en ce que**, à l'intérieur d'un segment en forme de C ou de U de la poignée, constitué essentiellement de deux coques partielles se complétant l'une l'autre pour former un corps creux, il est prévu des fiches de raccordement (19, 20) pour la connexion du câblage des capteurs avec le dispositif de commande et de régulation contrôlant l'alimentation en énergie, d'une part, et pour le raccordement de dispositifs d'extension (23), d' autre part.

10. Chariot de distribution ou de transport selon les revendications 4 à 9, **caractérisé en ce que**, dans l'une des branches opposées l'une à l'autre du segment en forme de C ou de U de la poignée, sont posés et fixés les câbles reliés avec le ou les capteur(s) de force et, dans la branche opposée du segment en forme de C ou de U de la poignée, sont posés et fixés les câbles reliés au capteur capacitif.
